Europäisches Patentamt

European Patent Office

Office européen des brevets

(19)

(11) EP 1 371 470 A1

(12) **DEMANDE DE BREVET EUROPEEN**

(43) Date de publication:
**17.12.2003 Bulletin 2003/51**

(51) Int Cl.$^7$: **B29C 45/00**, B29C 45/26

(21) Numéro de dépôt: **03291255.2**

(22) Date de dépôt: **27.05.2003**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **10.06.2002 FR 0207081**

(71) Demandeur: **ALCATEL**
**75008 Paris (FR)**

(72) Inventeurs:
• **Girardon, Valérie**
  **91220 Bretigny/Orge (FR)**
• **Loury, Hervé**
  **35210 Chatillon-en-Vendelais (FR)**

(74) Mandataire: **Korakis-Ménager, Sophie et al**
**Compagnie Financière Alcatel**
**Département de Propriété Industrielle,**
**5, rue Noel Pons**
**92734 Nanterre Cedex (FR)**

(54) **Procédé de fabrication d'une pièce polymère avec coefficient d'expansion thermique négatif, et pièce polymère obtenue avec un tel procédé**

(57) Procédé de fabrication d'une pièce polymère présentant un coefficient d'expansion thermique (TEC) négatif, caractérisé en ce que le procédé comporte une étape d'injection d'un polymère thermotrope dans un moule, ledit moule présentant une entrée d'injection sensiblement égale à l'épaisseur de la pièce et une longueur adaptée pour provoquer l'élongation du polymère, ladite étape d'injection étant conduite avec des conditions de température et de pression contrôlées.

FIG_4

EP 1 371 470 A1

**Description**

La présente invention se rapporte à un procédé de fabrication d'une pièce polymère présentant un coefficient d'expansion thermique (TEC, pour Thermal Expansion Coefficient en anglais) longitudinal négatif sur une large gamme de température. Une telle pièce peut trouver une application comme support de composant optique.

Les composants optiques peuvent être conditionnés dans des supports de différentes natures selon le type de composant et les applications envisagées. Ainsi, par exemple, les composants optiques peuvent être disposés dans des supports à base de polymère ou de céramique. Les composants envisagés dans le cadre de la présente invention peuvent être, par exemple, des composants dits passifs, tels que des réseaux de Bragg photo-inscrits dans des guides optiques ou des multiplexeurs/démultiplexeurs à réseaux de guides (AWG pour Arrayed Waveguide Grating).

Certains composants optiques, tels que les composants à fibre en particulier, présentent une dérive en température due à l'effet thermo-optique et du fait d'un coefficient d'expansion positif dans la gamme de température de fonctionnement du composant. En effet, lorsque la température extérieure varie, la valeur de l'indice de réfraction effectif $n_{eff}$ du guide est modifiée, ce qui induit une modification des propriétés optiques de la fibre.

En particulier, lorsqu'un réseau de Bragg est inscrit dans une portion de fibre, la longueur d'onde du filtre formé est donnée par la relation de Bragg :

$$\lambda_B = 2\Lambda n_{eff} \qquad\qquad [1];$$

avec $n_{eff}$ l'indice de réfraction effectif du guide optique dans lequel le réseau est photo-inscrit, en général de la silice dopée, et $\Lambda$ le pas du réseau, c'est à dire la distance entre deux modulations d'indice successives dans le guide optique.

Ainsi, une modification de l'indice effectif $n_{eff}$ ou du pas du réseau $\Lambda$ entraîne ipso facto une modification de la longueur d'onde de Bragg et donc de la réponse spectrale du filtre. Un filtre optique à réseau de Bragg présente donc une sensibilité à la température et à la traction, ces effets étant classiquement utilisés pour ajuster ou accorder de tels filtres optiques dans de nombreuses applications bien connues dans le domaine technique.

Néanmoins, la sensibilité d'un filtre à la température, lorsqu'elle n'est pas volontairement induite, constitue un problème à résoudre. Les composants optiques ont en effet une gamme de température de fonctionnement de l'ordre de 100°C (généralement de -10°C à +70°C), qui peut entraîner un décalage de la longueur d'onde de Bragg $\lambda_B$ allant jusqu'à 1nm.

On établit en effet la relation suivante pour exprimer la variation thermique de la longueur d'onde de Bragg :

$$d\lambda_B / dT = 2\Lambda \, (dn_{eff} / dT + n_{eff} \cdot \alpha_{guide}) \qquad\qquad [2];$$

avec $dn_{eff}/dT$ l'effet thermo-optique et $\alpha_{guide}$ le coefficient d'expansion thermique du matériau du guide. Stabiliser la longueur d'onde de Bragg $\lambda_B$ par rapport aux variations de température dT consiste donc à compenser l'effet thermo-optique du guide, qui est naturel, par un effet thermo-mécanique en agissant sur le paramètre $\alpha_{guide}$. Classiquement, sans aucune compensation thermique, un réseau de Bragg présente une sensibilité à la température $\Delta\lambda_B / \Delta T$ de l'ordre de 10pm/K.

Un tel problème est bien connu du domaine technique de l'invention et a été identifié en particulier dans la publication de G.W. Yoffe et al, «Temperature-compensated optical fiber Bragg Gratings », OFC'95, Technical Digest, W14, pp134-135. Cette publication propose de résoudre le problème susmentionné en fixant une fibre à réseau de Bragg dans un montage comportant un tube en Invar, de faible sensibilité thermique, associé à un matériau à forte sensibilité thermique. L'agencement de ces deux matériaux est tel que la dérive en température de la fibre à réseau de Bragg est compensée par une traction ou compression appropriée de la portion de fibre. Cependant, une telle solution est compliquée à mettre en oeuvre.

Une autre solution connue pour compenser les dérives en température d'un composant optique consiste à conditionner un tel composant dans un support présentant un coefficient d'expansion thermique négatif afin de contrebalancer les effets de la dérive thermique sur le comportement optique du composant.

A cet effet, des supports de composants optiques en céramique ont été proposés. En particulier, la demande de brevet EP 0 995 723 propose un procédé de fabrication d'une pièce en céramique présentant un coefficient d'expansion thermique négatif compris entre $-2.5.10^{-6}/°C$ et $-10.10^{-6}/°C$ sur une gamme de température allant de -40°C à +160°C. De tels supports répondent aux contraintes optiques de compensation thermique mais constituent des produits onéreux et fragiles. Les supports en céramiques sont en effet composés de matériaux inorganiques friables qui imposent des précautions de manipulation délicates.

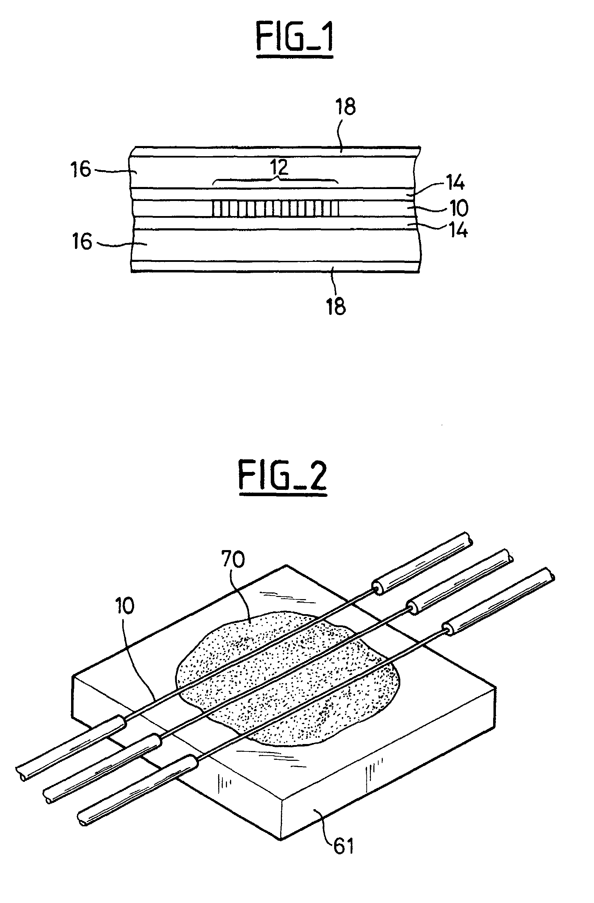

Pour pallier ces inconvénients de prix et de fragilité, des conditionnements de composants optiques en polymère ont été proposés. En particulier, la demande de brevet EP 0 798 573 propose une fibre optique à réseau de Bragg comprenant un revêtement polymère présentant un coefficient d'expansion thermique négatif. Comme illustré sur la figure 1, la fibre 10 (composée d'un matériau à base de silice et comportant un réseau de Bragg 12 photo-inscrit) est entourée d'un premier revêtement interne 14 en résine siliconée et d'un second revêtement externe 16 en polymère cristallin liquide. Eventuellement, un revêtement d'identification 18 peut être ajouté, composé d'une résine sensible aux ultraviolets. La fibre 10 et le revêtement interne 14 ont un coefficient d'expansion thermique positif compensé par le coefficient d'expansion thermique négatif du revêtement externe 16. Ainsi, le composant optique constitué par la fibre 10 à réseau de Bragg 12 présente un comportement stable dans une large gamme de température grâce à la compensation apportée par le revêtement extérieur 16.

Cette demande de brevet EP 0 798 573 décrit en outre un procédé de fabrication d'un tel polymère cristallin liquide de coefficient d'expansion thermique négatif. Le procédé décrit consiste à extruder le polymère en l'étirant à travers une filière afin d'orienter le cristal en tension selon une direction. Par un tel procédé, on peut obtenir une pièce en polymère cristallin ayant une forme de film, tube ou fil. En effet, selon la principale application décrite et mentionnée précédemment, le polymère obtenu est utilisé comme revêtement 16 de fibre optique et présente une épaisseur d'environ 300μm. Cette méthode exige néanmoins une homogénéité parfaite des revêtements afin de garantir un comportement isotrope tout le long du réseau de Bragg inscrit.

Selon une autre application décrite dans cette demande de brevet et illustrée sur la figure 2, une pièce en polymère 61, ayant la forme d'un support de 2mm d'épaisseur, est obtenue par un tel procédé d'extrusion. Le matériau cristallin liquide est orienté selon une direction dans le plan du support. Cette pièce 61 est utilisée comme support de fibres optiques 10 fixées sur ladite pièce au moyen d'une colle époxy 70. Les fibres peuvent éventuellement être disposées dans des rainures en V usinées dans la pièce support 61. Néanmoins, le procédé d'extrusion n'est pas bien adapté à la réalisation de telles pièces massives.

De même, dans le cas d'un composant à réseaux de dispersion angulaire, dit AWG, classiquement utilisés pour des applications de multiplexage et/ou démultiplexage, ou pour des applications de sélection en longueur d'onde, les variations de température ont une influence sur le comportement optique du composant.

De façon classique et schématique, un composant AWG intégré sur un substrat, par exemple en silicium, comporte des guides d'onde d'entrée transmettant des signaux optiques à des longueurs d'onde données $\lambda_1$, $\lambda_2$, ... $\lambda_n$ dans un coupleur d'entrée vers un réseau de guides d'onde dans lequel les signaux optiques subissent des déphasages et sont ensuite focalisés par un coupleur de sortie dans des guides de sortie. Chaque signal optique subit les opérations suivantes :

- une diffraction dans le coupleur d'entrée, mathématiquement représentée par la transformée de Fourier du signal subissant la diffraction, chaque guide du réseau situé au niveau de la surface de sortie du coupleur recevant une partie de l'onde diffractée,
- des déphasages dans le réseau de guides à chemins optiques variables, le chemin optique parcouru dans un guide du réseau s'exprimant en fonction de l'indice de réfraction effectif $n_{eff}$ du guide et de sa longueur; les déphasages produisant en sortie du réseau de guides des interférences qui sont constructives dans une direction dépendant de la longueur d'onde,
- une focalisation sur la surface de sortie du coupleur des interférences constructives des ondes issues des guides du réseau.

Le déphasage des signaux optiques dans le réseau de guide de l'AWG est une étape essentielle du fonctionnement de ce composant et la sensibilité de chaque guide dudit réseau à la température entraîne une modification des propriétés optiques du composant.

Une solution connue pour stabiliser un tel composant en température consiste à utiliser des montages appropriés, tel que celui décrit dans la publication « Polymer Waveguides and Devices » de Jorg Hubner, Tech Univ. Of Denmark, OFC 2002. Un polymère ayant un important coefficient d'expansion négatif est utilisé comme revêtement de la structure multicouches du réseau de guides d'onde. Mais une telle sur-couche de revêtement induit des contraintes sur lesdits guides et modifie la distribution de phase dans le réseau de guide, ce qui conduit à une dégradation des performances du composant AWG.

La présente invention a pour but de proposer un autre procédé de réalisation d'une pièce polymère ayant un coefficient d'expansion thermique négatif. Le procédé selon l'invention est basé sur la technique de moulage-injection. Jusqu'à présent, l'homme du métier n'était pas parvenu à obtenir une pièce en polymère présentant un coefficient d'expansion thermique négatif avec une telle technique, car la caractéristique du coefficient d'expansion thermique négatif était liée à l'étirage du polymère (par extrusion) qui forçait la matière cristalline selon une certaine orientation.

La présente invention a donc pour objectif de proposer un procédé de moulage-injection d'une pièce polymère présentant un coefficient d'expansion thermique négatif. Cet objectif est atteint par l'utilisation d'un moule adapté et par un contrôle précis des paramètres de temps, de température et de pression du moulage-injection.

L'invention concerne plus particulièrement un procédé de fabrication d'une pièce polymère présentant un coefficient d'expansion thermique négatif, caractérisé en ce que le procédé comporte une étape d'injection d'un polymère thermotrope dans un moule, ledit moule présentant une entrée d'injection sensiblement égale à l'épaisseur de la pièce et une longueur adaptée pour provoquer l'élongation du polymère, ladite étape d'injection étant conduite avec des conditions de température et de pression contrôlées.

Selon une caractéristique, la température d'injection du polymère est comprise entre 290°C et 360°C et la pression d'injection dudit polymère est comprise entre 200 et 1500 Bars, avec une pression de maintien comprise entre 200 et 1500 bars.

Selon une caractéristique avantageuse, la pression d'injection du polymère est inférieure ou égale à la pression de maintien du polymère dans le moule.

Selon une caractéristique, le moule présente un réservoir recueillant un surplus d'injection.

L'invention concerne également une pièce polymère obtenue par le procédé selon l'invention, caractérisé en ce que ladite pièce est massive et présente un coefficient d'expansion thermique négatif compris entre $-4.10^{-6}$ et $-10.10^{-6}$.

Les particularités et avantages de l'invention apparaîtront plus clairement à la lecture de la description qui suit, donnée à titre d'exemple illustratif et non limitatif et faite en référence aux figures annexées dans lesquelles :

- la figure 1, déjà décrite, illustre une fibre optique comportant un revêtement polymère avec un coefficient d'expansion thermique négatif obtenu selon une technique de l'art antérieur ;
- la figure 2, déjà décrite, illustre un support de fibres optiques composé d'une pièce polymère avec un coefficient d'expansion thermique négatif obtenue selon une technique de l'art antérieur ;
- la figure 3 est un schéma du moule utilisé par le procédé selon l'invention ;
- la figure 4 est un schéma d'une pièce moulée injectée avec le procédé selon l'invention ;
- la figure 5 est un graphe reportant la sensibilité de la longueur d'onde de Bragg d'un filtre disposé sur un support de la figure 4 en fonction de la température pour différents cycles de température.

La présente invention concerne un procédé de fabrication d'une pièce polymère présentant un coefficient d'expansion thermique négatif. L'invention vise à obtenir une telle pièce préférentiellement, mais non exclusivement, sous forme massive pour des applications à des supports de composants optiques par exemple. Le polymère constituant la pièce objet de l'invention est un polymère thermotrope, appelé couramment polymère cristallin liquide PCL, tel que du Vectra A 950, par exemple.

Selon l'invention, une telle pièce polymère est obtenue par une technique de moulage injection. Une telle technique est connue en soi, mais son application à la réalisation d'une pièce polymère présentant un coefficient d'expansion thermique négatif nécessite, d'une part, l'utilisation d'un moule adapté et d'autre part, un contrôle approprié des conditions de température et de pression pendant l'injection.

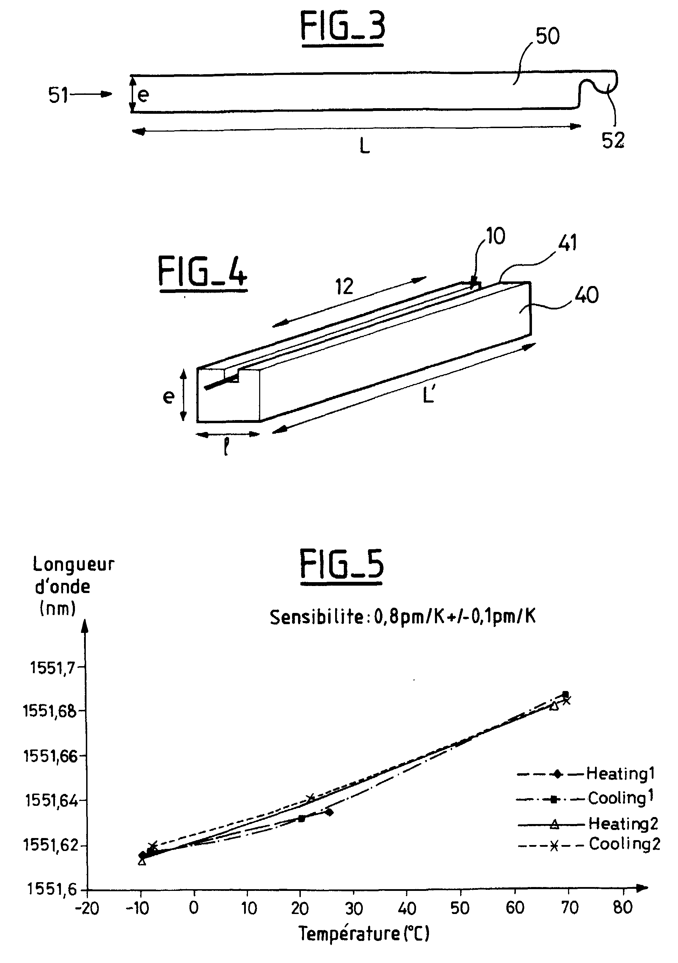

La figure 3 représente schématiquement un moule pouvant être utilisé pour l'injection d'une pièce polymère selon l'invention. Le moule 50 présente une forme interne correspondant à la forme désirée de la pièce à fabriquer. Une entrée d'injection 51 est prévue à une extrémité du moule 50. Selon l'invention, cette entrée d'injection 51 est sensiblement égale à l'épaisseur e de la pièce polymère à fabriquer. En outre, le moule présente une longueur L largement supérieure à l'épaisseur e de la pièce, par exemple dix fois supérieure $L \geq 10*e$.

Cette forme particulière du moule permet avantageusement de provoquer, sous certaines conditions opératoires de moulage-injection, un flot de matière polymère selon un axe unidirectionnel afin d'entraîner une orientation régulière du polymère fondu dans un plan longitudinal de la pièce moulée. C'est cette élongation du polymère dans le moule lors de l'injection, avec les conditions opératoires qui seront décrites ultérieurement, qui provoque l'orientation particulière du polymère et détermine le coefficient d'expansion thermique négatif de la pièce.

En outre, le moule 50 peut présenter un réservoir 52 à l'extrémité opposée à l'entrée d'injection 51. Ce réservoir 52 permet d'éviter un retour de matière injectée vers l'intérieur du moule, ce qui provoquerait une rupture de l'orientation cristalline recherchée.

Le procédé selon l'invention consiste donc à effectuer une étape de moulage-injection d'un polymère cristallin liquide dans un moule, tel que précédemment décrit, avec des conditions opératoires particulières.

Les paramètres définissant les conditions opératoires du moulage-injection sont connus de l'homme du métier qui les adapte selon les applications. Ces paramètres sont, classiquement, la température d'injection (température de la matière injectée), la pression d'injection (le débit de la matière entrant dans le moule), la pression de maintien (la pression dans le moule contenant la matière injectée), le temps de maintien (durée du moulage), les températures du moule et du fût et la vitesse de rotation de la vis d'injection.

Selon l'invention, les conditions opératoires sont bien déterminées afin d'obtenir le coefficient de dilatation thermique longitudinal négatif de la pièce. Le tableau ci-dessous présente le coefficient d'expansion thermique obtenu avec différentes conditions opératoires de moulage-injection selon l'invention, avec du Vectra comme PCL :

| TEC /°C .10$^{-6}$ | T injection (°C) | P injection (Bars) | P maintien (Bars) |
|---|---|---|---|
| (-7.9) - (-7.6) | 290-310 | 200 | 1500 |
| (-7.7) - (-7.2) | 290-310 | 500 | 500 |
| (-4.3) - (-4.0) | 290-310 | 500 | 1500 |

En particulier, l'orientation du polymère est favorisée par une augmentation de la pression de maintien à pression d'injection faible. Le temps de maintien dans le moule est d'environ 2 à 6 secondes.

Eventuellement, l'étape d'injection peut être suivie d'une étape de découpe de la pièce injectée afin de ne retenir, pour utilisation, qu'une portion sur laquelle le polymère présente une orientation parfaitement régulière du cristal dans un plan longitudinal. Cette étape de découpe peut être nécessitée en particulier lorsque la pièce à fabriquer doit avoir une longueur inférieure à la longueur du moule.

La figure 5 illustre une pièce obtenue par le procédé selon l'invention. La pièce 40 a une longueur L' largement supérieure à son épaisseur e. En revanche, avec le procédé selon l'invention, la largueur 1 de la pièce 40 peut être sensiblement égale à son épaisseur e. En outre, l'épaisseur e de la pièce n'est pas limitée et peut facilement dépasser 2mm.

De plus, une pièce obtenue par moulage-injection, même de faible épaisseur (<2mm), présente l'avantage de ne pas subir de déformation de type flambage avec les variations de température, ce qui est classique lorsque la pièce a été obtenue par extrusion. La déformation de type flambage est une déformation par ondulations longitudinales de la pièce sous l'effet d'une augmentation de la température.

La pièce peut comporter une rainure 41, par exemple pour le positionnement d'une fibre 10 à réseau de Bragg 12, ou autre. Cette rainure peut être obtenue directement lors de l'injection de la pièce à partir d'une forme adaptée du moule, sans nécessiter une étape supplémentaire d'usinage. Une telle rainure 41 permet par exemple de protéger la fibre 10 mise à nu sur la portion à réseau de Bragg 12. De même, la pièce 40 peut présenter des ergots de positionnement ou toute autre particularité mécanique à partir d'un moule adapté, à condition de ne pas rompre l'orientation longitudinale globale du polymère cristallin liquide moulé. De même, la pièce polymère selon l'invention peut être conçue pour recevoir un AWG.

Le graphe de la figure 5 illustre le comportement d'un réseau de Bragg sur fibre disposée sur une pièce support en polymère selon l'invention, par exemple tel qu'illustré sur la figure 4. Le réseau de Bragg présente une sensibilité à la température $\Delta\lambda_B$ /$\Delta$T de l'ordre de 0.8 à 1 pm/K contre les 10pm/K mentionnés précédemment en référence à un réseau de Bragg non compensé. En particulier, comme le montre le graphe de la figure 5, cette faible sensibilité à la température est maintenue stable sur une large gamme et pour plusieurs cycles de température, « heating 1, 2 » et « cooling 1, 2 » désignant respectivement les cycles de chauffage et de refroidissement du réseau de Bragg.

**Revendications**

1. Procédé de fabrication d'une pièce polymère présentant un coefficient d'expansion thermique (TEC) négatif, **caractérisé en ce que** le procédé comporte une étape d'injection d'un polymère thermotrope dans un moule (50), ledit moule présentant une entrée d'injection (51) sensiblement égale à l'épaisseur (e) de la pièce (40) et une longueur (L) adaptée pour provoquer l'élongation du polymère, ladite étape d'injection étant conduite avec des conditions de température et de pression contrôlées.

2. Procédé selon la revendication 1, **caractérisé en ce que** la température d'injection du polymère est comprise entre 290°C et 360°C et la pression d'injection dudit polymère est comprise entre 200 et 1500 Bars, avec une pression de maintien comprise entre 200 et 1500 bars.

3. Procédé selon la revendication 2, **caractérisé en ce que** la pression d'injection du polymère est inférieure ou égale à la pression de maintien du polymère dans le moule.

4. Procédé selon l'une des revendications 1 à 3, **caractérisé en ce que** le moule (50) présente un réservoir (52) recueillant un surplus d'injection.

**5.** Procédé selon l'une des revendications 1 à 4, **caractérisé en ce qu'**il comporte en outre une étape de découpe transversale de la pièce injectée.

**6.** Pièce polymère obtenue par le procédé selon l'une quelconque des revendications 1 à 5, **caractérisé en ce que** ladite pièce (40) est massive et présente un coefficient d'expansion thermique (TEC) négatif compris entre $-4.10^{-6}$ et $-10.10^{-6}$.

**7.** Pièce polymère selon la revendication 6, **caractérisée en ce qu'**elle présente une épaisseur (e) supérieure à 2mm.

**8.** Support de composant optique composé d'une pièce polymère selon l'une des revendications 6 à 7.

# FIG_1

# FIG_2

# FIG_3

# FIG_4

# FIG_5

Longueur d'onde (nm)

Sensibilite : 0,8pm/K +/- 0,1pm/K

- ◆ — Heating1
- ■ — Cooling1
- △ — Heating2
- ✕ — Cooling2

Température (°C)

8

Office européen
des brevets

**RAPPORT DE RECHERCHE EUROPEENNE**

Numéro de la demande

EP 03 29 1255

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | PATENT ABSTRACTS OF JAPAN vol. 016, no. 489 (P-1433), 9 octobre 1992 (1992-10-09) & JP 04 174805 A (TOSHIBA MACH CO LTD), 23 juin 1992 (1992-06-23) * abrégé * * page 23, colonne de droite, dernier alinéa; figure 1 * | 1-8 | B29C45/00 B29C45/26 |
| X | US 4 627 952 A (OPHIR ZOHAR) 9 décembre 1986 (1986-12-09) * colonne 1, ligne 25 - ligne 30; figure 3 * * colonne 1, ligne 39 * * colonne 1, ligne 42 * | 1-8 | |
| A | EP 0 169 073 A (CELANESE CORP) 22 janvier 1986 (1986-01-22) * page 6, ligne 11 * * page 6, ligne 13 - ligne 14 * * page 16, ligne 9 - ligne 10 * * page 17, ligne 30 - ligne 37 * * tableau III * | 1-8 | DOMAINES TECHNIQUES RECHERCHES (Int.Cl.7) B29C |
| A | PATENT ABSTRACTS OF JAPAN vol. 010, no. 322 (P-511), 31 octobre 1986 (1986-10-31) -& JP 61 128213 A (NIPPON TELEGR & TELEPH CORP), 16 juin 1986 (1986-06-16) * abrégé * | 1-8 | |

Le présent rapport a été établi pour toutes les revendications

| Lieu de la recherche | Date d'achèvement de la recherche | Examinateur |
|---|---|---|
| MUNICH | 22 août 2003 | Kujat, C |

**ANNEXE AU RAPPORT DE RECHERCHE EUROPEENNE
RELATIF A LA DEMANDE DE BREVET EUROPEEN NO.**　　　EP 03 29 1255

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-08-2003

| Document brevet cité au rapport de recherche | | Date de publication | Membre(s) de la famille de brevet(s) | | Date de publication |
|---|---|---|---|---|---|
| JP 04174805 | A | 23-06-1992 | JP | 2575530 B2 | 29-01-1997 |
| US 4627952 | A | 09-12-1986 | AUCUN | | |
| EP 0169073 | A | 22-01-1986 | CA | 1284903 C | 18-06-1991 |
| | | | EP | 0169073 A2 | 22-01-1986 |
| | | | JP | 1852635 C | 21-06-1994 |
| | | | JP | 5069203 B | 30-09-1993 |
| | | | JP | 61075311 A | 17-04-1986 |
| JP 61128213 | A | 16-06-1986 | JP | 1854846 C | 07-07-1994 |
| | | | JP | 5069202 B | 30-09-1993 |